# EUROPEAN PATENT APPLICATION

(11) **EP 4 814 716 A1**
(43) Date of publication of application: **30.09.2026**
(21) Application number: 24902935.6
(22) Date of filing: 13.12.2024
(51) Int. Cl.: G06F 9/48, G06F 9/50

(54) **TASK PROCESSING METHOD AND CORRESPONDING DEVICE**

(30) Priority: 15.12.2023 CN 202311735767
(71) Applicant: Huawei Technologies Co., Ltd., Shenzhen, Guangdong 518129 (CN)
(72) Inventor: DU, Jiacheng, Shenzhen, Guangdong 518129 (CN)
(74) Representative: Goddar, Heinz J.
(86) International application number: PCT/CN2024/139019
(87) International publication number: WO 2025/124518

(57) **Abstract**

This application provides a task processing method, which may be applied to a cloud system. The cloud system may obtain a directed acyclic graph DAG used to describe a data processing task, where a node in the directed acyclic graph represents a task; and group a plurality of nodes into at least two task groups, and then process each task group, where a quantity of tasks in each task group is not greater than N, and N is determined based on a size of a machine memory, a size of a memory occupied by an instance, and a size of a memory occupied by output data of a task. If an indegree of a node associated with a task in each task group is 0, tasks in a same task group do not depend on each other and do not need to generate intermediate data. This reduces memory usage. A quantity of tasks in the task group is not greater than N, so that a data amount of the output data of the task can be limited, thereby reducing memory usage of the output data of the task. Tasks in a same task group can be processed in parallel, thereby improving task processing efficiency.

## Description

This application claims priority to Chinese Patent Application No. 202311735767.4, filed with the China National Intellectual Property Administration on December 15, 2023, and entitled "TASK PROCESSING METHOD AND CORRESPONDING APPARATUS", which is incorporated herein by reference in its entirety.

### TECHNICAL FIELD

This application relates to the field of cloud computing technologies, and specifically, to a task processing method and a corresponding apparatus.

### BACKGROUND

When processing big data, a cloud system usually converts processing of the big data into processing of different tasks. Processing a piece of big data involves a plurality of processing tasks. Currently, most data processing tasks can be abstracted into a directed acyclic graph (directed acyclic graph, DAG) by using a task (task) as a node and a task dependency relationship as an edge. Then, task orchestration and scheduling are performed based on the directed acyclic graph.

A current task orchestration and scheduling solution basically uses a best-effort (best-effort)-based algorithm or a quality of service-constraint (QoS-constraint)-based algorithm. According to the best-effort-based algorithm, material costs of resources are not considered, and an objective is to complete tasks as early as possible or minimize overall completion time of a workflow. According to the quality of service-constraint-based algorithm, not only completing tasks as early as possible is considered, but also material costs of using different resources are considered, to meet quality of service requirements of different users.

The best-effort-based algorithm causes high material costs and wastes resources. Currently, the quality of service-constraint-based algorithm has made some progress, and completion time may be shortened by executing tasks in parallel. However, machine memory space of the cloud system restricts a parallelism degree of memory computing. In memory computing, tasks generate intermediate data, and a large amount of intermediate data generated by a large number of tasks cannot be consumed or released in time. As a result, memory is stacked, memory overflow may occur, and system performance is affected.

### SUMMARY

This application provides a task processing method, to reduce memory usage in a big data task processing process, and improve system performance. This application further provides a corresponding apparatus, system, computer-readable storage medium, and computer program product, and the like.

A first aspect of this application provides a task processing method, including: obtaining a first directed acyclic graph used to describe a data processing task, where the first directed acyclic graph includes a plurality of nodes and a plurality of edges used to connect the nodes, each node represents a task, and the edge represents a dependency relationship between two connected nodes; grouping the plurality of nodes into at least two task groups, where a quantity of tasks in each task group is not greater than N, an indegree of a node associated with a task in each task group is zero, N is determined based on a size of a machine memory, a size of a memory occupied by an instance, and a size of a memory occupied by output data of the task, and N is a positive integer; and processing each task group.

In this application, each node in the first directed acyclic graph may represent a task, or may represent a task set. There is no dependency relationship between tasks in the task set.

In this application, a process of dividing the first directed acyclic graph into the at least two task groups may be performed in a plurality of rounds, and only a task associated with a node whose indegree is zero is grouped in each round.

In this application, the machine memory may be a memory of a physical machine that executes the task group in the cloud system, or may be a memory of a virtual machine (virtual machine, VM) that executes the task group. The instance refers to a software resource such as a process or a thread that executes the task group, or a hardware resource such as a virtual machine or a container that executes the task group. The output data of the task refers to data generated after the task is executed.

In this application, tasks in a same task group may be processed in parallel, and task groups that have no dependency relationship with each other in different task groups may also be processed in parallel.

In the first aspect, an indegree of a node associated with a task in each task group is 0, indicating that tasks in a same task group do not depend on each other, and no intermediate data needs to be generated, so that occupation of a machine memory can be reduced. In addition, a quantity of tasks in the task group is not greater than N, so that a data amount of output data of the task can be limited, thereby reducing memory usage of the output data of the task. In addition, tasks in a same task group are fully decoupled, do not depend on each other, and can be processed in parallel. This can improve task processing efficiency, reduce an end to end (end to end, E2E) delay of task processing, and improve system performance of task processing.

In a possible implementation, the step of grouping the plurality of nodes into the at least two task groups includes: grouping a node whose indegree is zero in the first directed acyclic graph into at least one task group, to obtain a second directed acyclic graph, and updating an indegree of a node in the second directed acyclic graph; and grouping a node whose indegree is zero in the second directed acyclic graph into at least one task group.

In this possible implementation, during task group division, only one task group may be obtained through division in each round. Even if a quantity of nodes whose indegrees are 0 is greater than N, only one task group is obtained through division. In this way, quick memory occupation can be avoided. Alternatively, when a quantity of nodes whose indegrees are 0 is greater than N, task groups may be obtained through batch division. When the memory is sufficient, task groups are obtained through batch division, so that a speed of dividing a directed acyclic graph can be improved.

In a possible implementation, the step of grouping the node whose indegree is zero in the first directed acyclic graph into at least one task group includes: When a quantity of nodes whose indegrees are zero in the first directed acyclic graph is not greater than N, grouping the nodes whose indegrees are zero into one task group; and when a quantity of nodes whose indegrees are zero in the first directed acyclic graph is greater than N, grouping no more than N nodes that meet an affinity requirement into a same task group.

In this possible implementation, tasks that meet the affinity requirement may be understood as tasks that have a dependency relationship with a same subsequently executed task. Execution of these tasks helps better process the subsequent task, and there is no dependency relationship between these tasks. Task groups are obtained through division based on affinity, which helps improve processing efficiency of a subsequent task.

In a possible implementation, the step of processing each task group includes: establishing a correspondence between P tasks in a first task group and M instances based on a task orchestration target, where P≤N, P is a positive integer, and M is a positive integer. The M instances are used to execute the P tasks, the first task group is any one of at least two task groups, and the task orchestration target is a shortest sum of time for executing the P tasks by the M instances.

In this possible implementation, the sum of time for executing the P tasks by the M instances may be obtained based on previous running statistics information. Statistics about time used by each instance to execute different tasks may be collected in advance, and then the sum of time used when the P tasks are executed by using the M instances is calculated. For a task in each task group, when a corresponding instance is allocated to the task, the P tasks are orchestrated based on a target of shortest time for executing the P tasks by the M instances. This can avoid a case in which processing of an entire task group is slowed down due to excessively long processing time of a task. In this way, an end-to-end delay is reduced, and resource utilization is improved.

In a possible implementation, when P>M, the foregoing step of establishing the correspondence between the P tasks in the first task group and the M instances according to a task orchestration policy includes: grouping the P tasks in the first task group into M subgroups based on the task orchestration target, where an absolute value of a difference between execution time of a task in at least one subgroup and a time reference value is less than a first threshold, and the time reference value includes a ratio of the time for executing the P tasks to M; and establishing a correspondence between the M subgroups and the M instances.

In this possible implementation, when P≤M, each task may be associated with one instance. When P>M, the P tasks may be first grouped, so that execution time of a task in each subgroup is as close as possible to the time reference value. In other words, an absolute value of a difference between the execution time of the task in the at least one subgroup and the time reference value is as close as possible to 0. The first threshold may be a very small positive number, a positive number close to 0, for example, 0.1 or 0.01. In this application, the P tasks are orchestrated and grouped into different subgroups based on a requirement that the absolute value of the difference between the execution time of the task in the at least one subgroup and the time reference value is less than the first threshold. This helps improve task processing efficiency.

In a possible implementation, the M subgroups include at least one first subgroup, the first subgroup includes one task, and execution time of the task is greater than the time reference value.

In this possible implementation, when execution time of a task is greater than the time reference value, the task may be separately grouped into a subgroup, and an instance is used to specially execute the task. In this way, the task can be prevented from slowing down another task.

In a possible implementation, the M subgroups include at least one second subgroup, the second subgroup includes at least two tasks, and an absolute value of a difference between a sum of execution time of the at least two tasks and the time reference value is less than the first threshold.

In this possible implementation, when execution time of some tasks is short, at least two such tasks may be grouped into one subgroup, and the at least two tasks in the subgroup are executed through a same instance. In this way, time of each instance for executing a task may be approximately the same, the instance does not need to enter a waiting state excessively early, and resource utilization is improved.

In a possible implementation, when P>M, establishing the correspondence between the P tasks in the first task group and the M instances according to a task orchestration policy includes: establishing an allocation relationship between each of the P tasks and the M instances, where an absolute value of a difference between execution time of at least two tasks pointing to a same instance and a time reference value is less than a first threshold, and the time reference value includes a ratio of a sum of time for executing P tasks to M; and configuring priorities for the at least two tasks pointing to the same instance, where the priorities indicate a sequence in which the at least two tasks pointing to the same instance are allocated to the corresponding instance.

In this possible implementation, the P tasks may not need to be grouped into subgroups, but instances for executing the tasks are directly determined. When instances configured for two or more tasks are the same, execution priorities need to be determined for these tasks, when a task is subsequently allocated to an instance, the task may be allocated to a corresponding instance for execution based on an allocation relationship between an instance and a task and a priority. When an instance of each task is determined, an absolute value of a difference between execution time of the at least two tasks pointing to the same instance and the time reference value is less than the first threshold. In this way, time for executing a task by each instance may be approximately the same, and the instance does not need to enter a waiting state excessively early, thereby improving resource utilization.

In a possible implementation, the method further includes: obtaining a maximum quantity of instances, a size of a memory occupied by each instance, a size of a memory occupied by output data of a single task, and a size of a machine memory; and determining N according to the following relational expression: ${\sum }_{i = 0}^{X} {MemAllocate}_{insi} + {\sum }_{j = 0}^{N} {ResSize}_{taskj} < {Limit}_{mem}$

*X* is the maximum quantity of instances, *MemAllocateᵢₙₛᵢ* is the size of the memory occupied by each instance, *ResSizeₜₐₛₖⱼ* is the size of the memory occupied by the output data of the single task, and *Limitₘₑₘ* is the size of the machine memory.

In this possible implementation, the value of N may be dynamically determined according to the foregoing relational expression. This helps improve precision of task group division.

In a possible implementation, the foregoing step of obtaining the first directed acyclic graph used to describe a data processing task includes: receiving a data processing requirement, where the requirement is used to determine a task that needs to be executed; and parsing a dependency relationship between tasks that need to be executed, to construct the first directed acyclic graph.

In this possible implementation, the data processing requirement may be proposed by a user or a tenant. For example, the requirement may be collecting statistics on one or more indicators in big data. Then, the plurality of tasks that need to be executed are determined based on the requirement, and the first directed acyclic graph is constructed based on the dependency relationship between the tasks. Constructing the directed acyclic graph can improve efficiency of subsequent task processing.

A second aspect of this application provides a task processing apparatus, configured to perform the method in any one of the first aspect or the possible implementations of the first aspect. Specifically, the task processing apparatus includes modules or units configured to perform the method according to any one of the first aspect or the possible implementations of the first aspect, for example, an obtaining unit, a first processing unit, and a second processing unit.

A third aspect of this application provides a task processing apparatus, including a transceiver, a processor, and a storage. The transceiver and the processor are coupled to the storage. The storage is configured to store a program or instructions. When the program or the instructions are executed by the processor, the task processing apparatus is enabled to perform the method in any one of the first aspect or the possible implementations of the first aspect.

A fourth aspect of this application provides a chip system. The chip system includes one or more interface circuits and one or more processors. The interface circuit and the processor are interconnected through a line. The interface circuit is configured to receive a signal from a storage of a task processing apparatus, and send the signal to the processor. The signal includes computer instructions stored in the storage. When the processor executes the computer instructions, the task processing apparatus performs the method according to any one of the first aspect or the possible implementations of the first aspect.

A fifth aspect of this application provides a computer-readable storage medium, storing a computer program or instructions. When the computer program or the instructions are run on a computer device, the computer device is enabled to perform the method in any one of the first aspect or the possible implementations of the first aspect.

A sixth aspect of this application provides a computer device program product. The computer device program product includes computer device program code. When the computer device program code is executed on a computer device, the computer device is enabled to perform the method in any one of the first aspect or the possible implementations of the first aspect.

A seventh aspect of this application provides a computer device cluster, including at least one computer device. Each computer device includes a processor and a storage. The processor of the at least one computer device is configured to execute instructions stored in the storage of the at least one computer device, so that the computer device cluster performs the method in any one of the first aspect or the possible implementations of the first aspect.

An eighth aspect of this application provides a cloud system, including the task processing apparatus according to the second aspect or the third aspect.

For technical effect brought by the second aspect to the eighth aspect, refer to technical effect brought by the first aspect or different possible implementations of the first aspect. Details are not described herein again.

### BRIEF DESCRIPTION OF DRAWINGS

FIG. 1A is a diagram of a structure of a cloud system according to an embodiment of this application;
FIG. 1B is a diagram of another structure of a cloud system according to an embodiment of this application;
FIG. 2 is a diagram of a structure of a task processing apparatus according to an embodiment of this application;
FIG. 3 is a diagram of an embodiment of a task processing method according to an embodiment of this application;
FIG. 4 is a diagram of an example of a directed acyclic graph according to an embodiment of this application;
FIG. 5 is a diagram of an example of a process of dividing a directed acyclic graph according to an embodiment of this application;
FIG. 6 is a diagram of a correspondence between a task and an instance according to an embodiment of this application;
FIG. 7 is a diagram of another structure of a cloud system according to an embodiment of this application;
FIG. 8 is a diagram of an architecture of a control plane in a cloud system according to an embodiment of this application;
FIG. 9 is a diagram of an attribute instance of a task according to an embodiment of this application;
FIG. 10 is a diagram of an example of a dependency relationship between tasks according to an embodiment of this application;
FIG. 11 is a diagram of an example of a scenario according to an embodiment of this application; and
FIG. 12 is a diagram of another structure of a task processing apparatus according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and accompanying drawings of this application, terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a task processing method, to reduce memory usage in a big data task processing process, and improve system performance. This application further provides a corresponding apparatus, system, computer-readable storage medium, and computer program product, and the like. Details are separately described in the following.

For ease of understanding, the following first explains technologies and the background in embodiments of this application.

Virtualization (virtualization) is a resource management technology that abstracts and converts various physical resources of a host, such as computing resources, network resources, and storage resources, and presents processed resources. This breaks an indivisibility barrier between physical structures of the host, allowing a user to use these resources in a better manner than an original configuration. Resources used through virtualization are referred to as virtual resources. The virtual resources are not limited by a deployment mode, a setting location, or a physical configuration of an existing physical resource.

A host (physical machine, PM) is a physical resource carrying a virtualization technology. The host is also referred to as a physical machine. Generally, a host configured to deploy a virtual instance is a physical server. The physical machine includes a plurality of physical devices. For example, the physical server includes physical devices such as a processor and a storage. A plurality of virtual instances may be deployed on one host, and the plurality of virtual instances deployed on a same host share a physical resource of the host. Based on different usage statuses, a virtual instance that belongs to only one user may be deployed on one host, or virtual instances that belong to a plurality of users may be deployed on one host.

An instance usually runs on an operating system of the host, and the instance may use hardware resources of the host. Different instances are isolated from each other. Generally, the instance may be a software resource such as a process or a thread that executes a task group, or a hardware resource such as a virtual machine or a container.

A virtual machine (virtual machine, VM) is a complete computer system that is simulated by using the virtualization technology, that has complete hardware system functions, and that runs in an entirely isolated environment. Some instruction subsets of the virtual machine may be processed in a host (host), and other instructions may be executed in an emulation manner. The virtual machine is also referred to as a virtual server.

The virtual machine may be considered as a set of several virtual devices, and the set of several devices is a complete computer system that has complete hardware system functions and that runs in a completely isolated environment. A virtual device is obtained through virtualization by using the virtualization technology and based on a physical device that can share resources. For example, based on the virtualization technology, a virtual processor obtained through virtualization based on a processor is a virtual device. For another example, based on the virtualization technology, a training card obtained through virtualization based on a field-programmable gate array (field-programmable gate array, FPGA) is also a virtual device.

A container provides a lightweight virtual running environment. The container may be obtained by packaging all code, libraries, dependency relationships, and the like of a user application into an image. When being executed, the image runs in the virtual running environment. In this case, the container is a runtime instance of the image, and is similar to a lightweight sandbox and can be launched, started, stopped, and deleted. The image does not share resources such as a memory, a processor (for example, a central processing unit (central processing unit, CPU)), and a disk of the host machine with another image. This implements container isolation between the image and the host and between the image and another image, and ensures that a process in the container cannot monitor any process or resource outside the container. Container technologies include docker, kubemetes, coreos, and other container technologies.

Task orchestration is to properly arrange an execution sequence of a plurality of tasks based on dependency relationships and priorities of the tasks to improve resource utilization and overall processing efficiency.

A straggler refers to a task that has longest execution time and that slows down an entire processing procedure in a parallel processing process. Such a task that takes long execution time and affects an overall progress is a straggler.

Dependency decoupling refers to reducing unnecessary dependency relationships between different tasks to improve task scheduling flexibility and prevent delays of some tasks from affecting subsequent tasks that depend on the tasks.

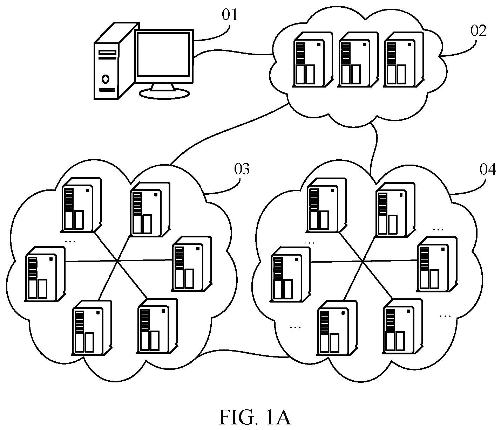

The virtualization technology described above is usually applied to a cloud system. The cloud system may be a public cloud, a private cloud, or a hybrid cloud. For the cloud system, refer to FIG. 1A for understanding.

As shown in FIG. 1A, a structure of the cloud system provided in an embodiment of this application may include a terminal device 01, a scheduling node 02, a worker node cluster 03, and a worker node cluster 04. Communication connections can be established between a client 01 and the scheduling node 02, between the scheduling node 02 and the worker node cluster 03, between the scheduling node 02 and the worker node cluster 04, and between the worker node cluster 03 and the worker node cluster 04. For example, a communication connection may be established between the terminal device 01 and the scheduling node 02 through a network. Optionally, the network may be a local area network, an internet, or another network. This is not limited in embodiments of this application.

In this implementation environment, operation and maintenance personnel of the cloud system may interact with the scheduling node 02 through the terminal device 01. For example, the operation and maintenance personnel may send a cloud system deployment instruction to the scheduling node 02 through the terminal device 01, to indicate the scheduling node 02 to deploy the cloud system based on resources of the scheduling node 02, the worker node cluster 03, and the worker node cluster 04. The cloud system is configured to: manage resources of the worker node cluster 03 and the worker node cluster 04, and provide a cloud service for a user based on the resources of the worker node cluster 03 and the worker node cluster 04. Alternatively, the user may send a data processing requirement through the terminal device 01. The scheduling node 02 may generate a corresponding data processing task based on the data processing requirement, and schedule the task to a worker node in the worker node cluster 03 and/or a worker node in the worker node cluster 04 for processing.

According to the task processing solution provided in this embodiment of this application, the scheduling node 02 may determine, based on a user requirement, tasks that need to be executed, parse a dependency relationship between the tasks that need to be executed, construct a directed acyclic graph (directed acyclic graph, DAG), and then perform a plurality of rounds of division on the DAG to group nodes in the DAG into at least two task groups, orchestrate tasks in the task groups, and then allocate the orchestrated tasks to instances for execution. The instances may be located on the scheduling node, or may be located in the worker node cluster 03 and the worker node cluster 04.

Optionally, the terminal device 01 is also referred to as user equipment (user equipment, UE), a mobile station (mobile station, MS), a mobile terminal (mobile terminal, MT), or the like, and is a device including a wireless communication function (providing voice/data connectivity for a user), for example, a handheld device with a wireless connection function. Currently, some examples of the terminal device are a mobile phone (mobile phone), a tablet computer, a notebook computer, a palmtop computer, a notebook computer, a wireless router, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in vehicle to everything, a wireless terminal in remote surgery (remote medical surgery), a wireless terminal in a smart grid (smart grid), a wireless terminal in transportation safety (transportation safety), a wireless terminal in a smart city (smart city), or a wireless terminal in a smart home (smart home).

The scheduling node 02 may be a cloud server or a cloud physical machine, or a cloud server cluster or a physical machine cluster including a plurality of cloud servers, or a cloud computing service center. A function of the scheduling node may be implemented by using software or hardware.

The scheduling node is used as an example of a software functional unit, and the scheduling node may include code run on a computing instance. The computing instance may include at least one of a physical host (compute device), a virtual machine, and a container. Further, there may be one or more computing instances. For example, the scheduling node may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The scheduling node is used as an example of a hardware functional unit, and the scheduling node may include at least one compute device such as a server. Alternatively, the scheduling node may be a device implemented by using an application-specific integrated circuit (application-specific integrated circuit, ASIC) or a programmable logic device (programmable logic device, PLD) or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the scheduling node may be distributed in a same region, or may be distributed in different regions. The plurality of compute devices included in the scheduling node may be distributed in a same AZ, or may be distributed in different AZs. Similarly, the plurality of compute devices included in the scheduling node may be distributed in a same VPC, or may be distributed in a plurality of VPCs. The plurality of compute devices may be any combination of compute devices such as a server, an ASIC, a PLD, a CPLD, an FPGA, and GAL.

The worker node cluster 03 and the worker node cluster 04 may be a server cluster including several servers, or a cloud computing service center. A large quantity of basic resources owned by a cloud service provider are deployed in the cloud computing service center. For example, compute resources, storage resources, and network resources are deployed in the cloud computing service center.

It should be noted that the scheduling node 02, the worker node cluster 03, and the worker node cluster 04 in the implementation environment may alternatively be implemented by using another resource platform other than the cloud computing service center. This is not specifically limited in this embodiment of this application.

It should be understood that the foregoing content is an example description of the cloud system provided in this embodiment of this application, and does not constitute a limitation on an application scenario of the method for deploying the resource management system on the cloud. A person of ordinary skill in the art may know that, as a service requirement changes, the application scenario may be adjusted based on an application requirement.

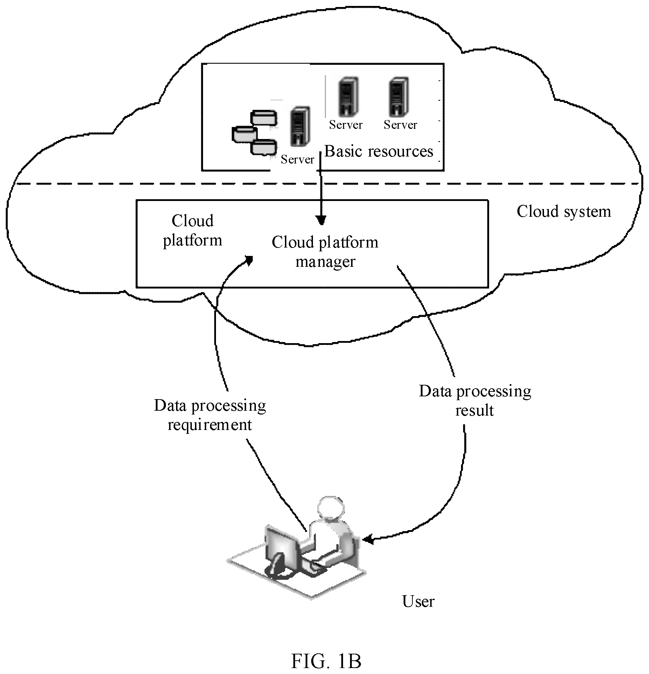

In this embodiment of this application, an architecture of the cloud system may be further understood with reference to FIG. 1B. As shown in FIG. 1B, the cloud system includes a cloud platform and a basic resource. The cloud platform includes a cloud platform manager, and the scheduling node described above may be a cloud platform manager in FIG. 1B. The basic resource may include a plurality of servers, and each server may be one worker node, or each server may include a plurality of worker nodes.

A worker node in FIG. 1B may be a compute device card or a virtual machine (virtual machine, VM). The compute device card may be at least one of a central processing unit (central processing unit, CPU), a graphics processing unit (graphic processing unit, GPU), and a neural network processing unit (neural network processing unit, NPU).

The cloud platform manager maintains or periodically collects information about each worker node in the basic resource, for example, information such as a resource use status (resource usage, a resource idle rate, or memory usage) of each worker node. The information may be used as auxiliary decision-making information of a quantity of tasks in a task group.

The cloud platform manager may receive a data processing requirement from the user, and then the cloud platform manager may determine corresponding tasks and a dependency relationship between the tasks based on the data processing requirement, generate a DAG, perform task group division, orchestrate intra-group tasks, and the like. The cloud platform manager may also allocate the task group to one or more worker nodes in the cloud system, and the one or more worker nodes execute the corresponding tasks. After the worker node completes the task, the cloud platform manager may return a data processing result to the user.

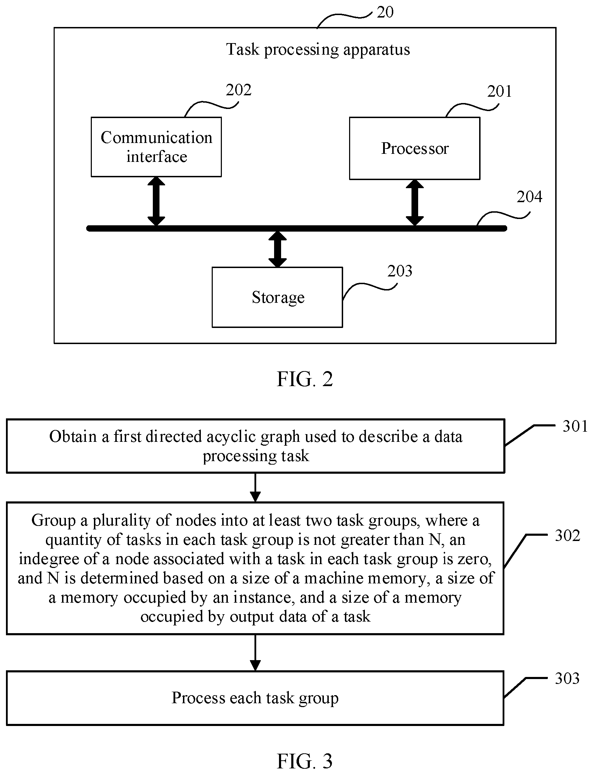

FIG. 2 is a diagram of a possible logical structure of a task processing apparatus according to an embodiment of this application. The task processing apparatus may be the scheduling node 02 in FIG. 1A or the cloud platform manager in FIG. 1B, or the task processing apparatus is included in the scheduling node 02 in FIG. 1A or the cloud platform manager in FIG. 1B. As shown in FIG. 2, the task processing apparatus 20 provided in this embodiment of this application includes a processor 201, a communication interface 202, a storage 203, and a bus 204. The processor 201, the communication interface 202, and the storage 203 are interconnected through the bus 204. In this embodiment of this application, the processor 201 is configured to control and manage an action of the task processing apparatus 20. For example, the processor 201 is configured to: generate a DAG based on a data processing requirement of a user, perform task group division, and orchestrate intra-group tasks. The communication interface 202 is configured to support the task processing apparatus 20 in performing communication. For example, the communication interface 202 may schedule a task to a worker node or receive the data processing requirement of the user. The storage 203 is configured to store program code and data of the task processing apparatus 20.

The processor 201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of indication, the bus is indicated by using only one thick line in FIG. 2, but this does not indicate that there is only one bus or one type of bus.

The following describes the task processing method provided in embodiments of this application. The method may be performed by a task processing apparatus. The task processing apparatus may be an independent physical machine, or may be a virtual machine, a processor, a chip, a chip system, or the like.

FIG. 3 is a diagram of an embodiment of a task processing method according to an embodiment of this application.

301: Obtain a first directed acyclic graph used to describe a data processing task.

The first directed acyclic graph includes a plurality of nodes and a plurality of edges used to connect the nodes, where each node represents a task, and the edge represents a dependency relationship between two connected nodes. Each node in the first directed acyclic graph may represent a task, or may represent a task set. There is no dependency relationship between tasks in the task set.

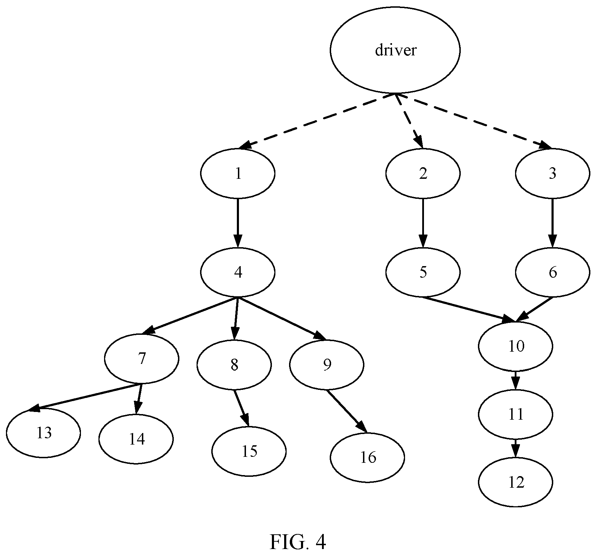

For understanding of the first directed acyclic graph, refer to FIG. 4. As shown in FIG. 4, the first directed acyclic graph includes 16 nodes: a node 1, a node 2, ..., and a node 16. Arrows between the nodes indicate dependency relationships between the nodes, that is, dependency relationships between tasks represented by nodes. Each arrow may represent an indegree. Each node may correspond to a task or a task set. The node 1, the node 2, and the node 3 are start nodes, node indegrees of the three nodes are all 0, a node indegree of the node 10 is 2, and node indegrees of other nodes are all 1.

FIG. 4 may correspond to a node list. The node list may be understood with reference to Table 1, as shown in Table 1.

**Table 1: Node list of the first directed acyclic graph**

| Node identifier | Node indegree |
|---|---|
| 1 | 0 |
| 2 | 0 |
| 3 | 0 |
| 4 | 1 |
| 5 | 1 |
| 6 | 1 |
| 7 | 1 |
| 8 | 1 |
| 9 | 1 |
| 10 | 2 |
| 11 | 1 |
| 12 | 1 |
| 13 | 1 |
| 14 | 1 |
| 15 | 1 |
| 16 | 1 |

When the first directed acyclic graph changes, the node list may be updated according to the change.

302: Group the plurality of nodes into at least two task groups, where a quantity of tasks in each task group is not greater than N, an indegree of a node associated with a task in each task group is zero, N is determined based on a size of a machine memory, a size of a memory occupied by an instance, and a size of a memory occupied by output data of a task, and N is a positive integer.

N in this application may be configured based on experience, or may be dynamically determined.

In this application, a process of determining N may be obtaining a maximum quantity of instances, a size of a memory occupied by each instance, a size of a memory occupied by output data of a single task, and a size of a machine memory. N may be determined according to the following relational expression: ${\sum }_{i = 0}^{X} {MemAllocate}_{insi} + {\sum }_{j = 0}^{N} {ResSize}_{taskj} < {Limit}_{mem}$

*X* is the maximum quantity of instances, *MemAllocateᵢₙₛᵢ* is the size of the memory occupied by each instance, *ResSizeₜₐₛₖⱼ* is the size of the memory occupied by the output data of the single task, and *Limitₘₑₘ* is the size of the machine memory.

The maximum quantity of instances, the size of the memory occupied by each instance, the size of the memory occupied by the output data of the single task, and the size of the machine memory may be obtained by collecting system resources. A value of N may be a maximum value that meets the foregoing relational expression. When the value of N is increased by 1, the foregoing relational expression is no longer met.

In this application, a process of dividing the first directed acyclic graph into the at least two task groups may be performed in a plurality of rounds, and only a task associated with a node whose indegree is zero is grouped in each round. A specific process may be: grouping a node whose indegree is zero in the first directed acyclic graph into at least one task group, to obtain a second directed acyclic graph, and updating an indegree of a node in the second directed acyclic graph; and grouping a node whose indegree is zero in the second directed acyclic graph into at least one task group, to obtain a new directed acyclic graph, updating a node list corresponding to the second directed acyclic graph, and then continuing a process of task group division, until all nodes in the first directed acyclic graph are grouped into task groups.

When the node whose indegree is zero in the first directed acyclic graph is grouped into the at least one task group, and when a quantity of nodes whose indegrees are zero in the first directed acyclic graph is not greater than N, the nodes whose indegrees are zero may be grouped into one task group; or when a quantity of nodes whose indegrees are zero in the first directed acyclic graph is greater than N, no more than N nodes that meet an affinity requirement are grouped into a same task group. Tasks that meet the affinity requirement may be understood as tasks that have a dependency relationship with a same subsequently executed task. Execution of these tasks helps better process the subsequent task, and there is no dependency relationship between these tasks. Task groups are obtained through division based on affinity, which helps improve processing efficiency of a subsequent task. For example, in FIG. 4, a task associated with the node 10 is a subsequently executed task of tasks associated with the node 5 and the node 6, and execution of the tasks associated with the node 5 and the node 6 affects the task associated with the node 10. The node 5 and the node 6 are tasks that meet the affinity requirement.

It should be noted that a new task group is enabled in each round of division, and a node being grouped in a second round is not allocated to a task group obtained through division in a first round. In this way, it can be ensured that task groups and tasks in the task groups are fully decoupled.

Quantities of tasks in the task groups may be equal, or may be unequal, provided that a quantity of tasks in each task group is not greater than N.

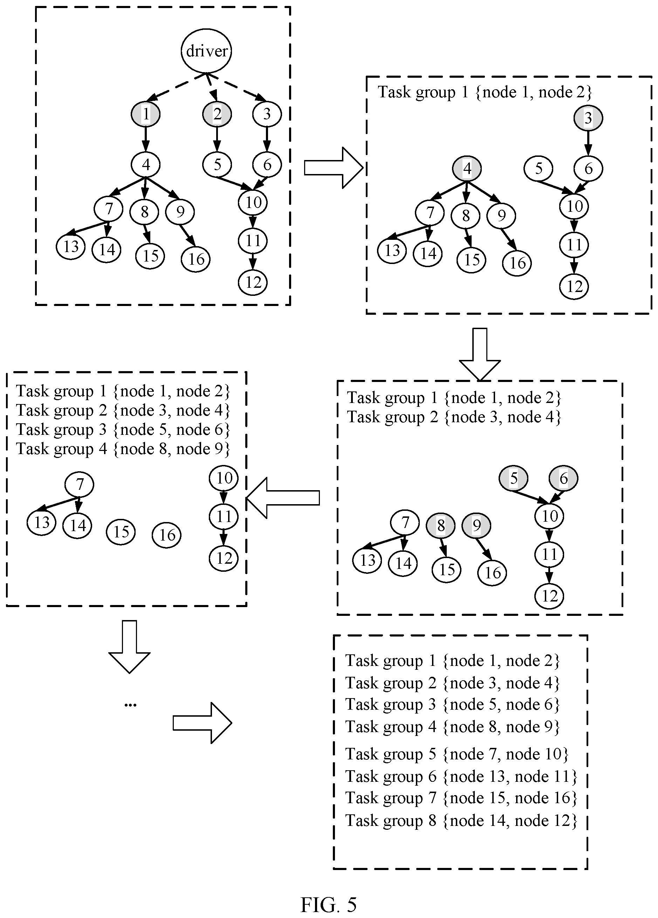

With reference to FIG. 4, an example in which N=2 and two tasks are grouped into each task group is used. Refer to FIG. 5. A task division process in the DAG in FIG. 4 is described.

As shown in FIG. 5, in a first round of division, the node 1 and the node 2 may be grouped into one task group. For example, the node 1 and the node 2 are grouped into a task group 1, which may be represented as the task group 1 {the node 1, the node 2}. After the node 1 and the node 2 are grouped into the task group 1, Table 1 needs to be updated. An update process may be deleting rows of the node 1 and the node 2, and updating indegrees of nodes associated with the node 1 and the node 2. In other words, indegrees of the node 4 and the node 5 are updated from 1 to 0.

In a second round of division, the node 3 and the node 4 may be grouped into a task group 2, which may be represented as the task group 2 {the node 3, the node 4}. After the node 3 and the node 4 are grouped into the task group 2, the node list needs to be further updated. The update process may be deleting rows of the node 3 and the node 4, and updating indegrees of nodes associated with the node 3 and the node 4. In other words, indegrees of the node 6, the node 7, the node 8, and the node 9 are updated from 1 to 0. In this case, a node list may be understood with reference to Table 2.

**Table 2: Node list of a directed acyclic graph after the second round of division**

| Node identifier | Node indegree |
|---|---|
| 5 | 0 |
| 6 | 0 |
| 7 | 0 |
| 8 | 0 |
| 9 | 0 |
| 10 | 2 |
| 11 | 1 |
| 12 | 1 |
| 13 | 1 |
| 14 | 1 |
| 15 | 1 |
| 16 | 1 |

In a third round of division, in consideration of affinity, the node 5 and the node 6 may be grouped into a task group 3, which may be represented as the task group 3 {the node 5, the node 6}. After the node 5 and the node 6 are grouped into the task group 3, the node list 2 needs to be further updated. The update process may be deleting rows of the node 5 and the node 4, and updating indegrees of nodes associated with the node 5 and the node 6. In other words, an indegree of the node 10 is updated from 2 to 0. In the third round, the node 8 and the node 9 may be further grouped into a task group 4, that is, the task group 4 {the node 8, the node 9}. After the node 8 and the node 9 are grouped into the task group 4, the node list needs to be further updated. The update process may be deleting rows of the node 8 and the node 9, and updating indegrees of nodes associated with the node 8 and the node 9. In other words, indegrees of the node 15 and the node 16 are updated from 1 to 0.

For a node list obtained after the task group 3 and the task group 4 are obtained through division, refer to Table 3 for understanding.

**Table 3: Node list of the directed acyclic graph after the third round of division**

| Node identifier | Node indegree |
|---|---|
| 7 | 0 |
| 10 | 0 |
| 11 | 1 |
| 12 | 1 |
| 13 | 1 |
| 14 | 1 |
| 15 | 0 |
| 16 | 0 |

For the DAG obtained through the third round of division, remaining nodes may be further grouped according to the foregoing division idea, until all the remaining nodes are grouped into task groups. After the first directed acyclic graph is divided, there may be eight task groups, such as the task group 1 {the node 1, the node 2}, the task group 2 {the node 3, the node 4}, the task group 3 {the node 5, the node 6}, the task group 4 {the node 8, the node 9}, a task group 5 {the node 7, the node 10}, a task group 6 {the node 13, the node 11}, a task group 7 {the node 15, the node 16}, and a task group 8 {the node 14, the node 12}.

303: Process each task group.

In this application, tasks in a same task group are fully decoupled, do not depend on each other, and can be processed in parallel. If there is no dependency relationship between different task groups, task groups that have no dependency relationship can also be processed in parallel, and task groups that have a dependency relationship cannot be processed in parallel.

For example, in the foregoing eight task groups, an execution sequence of the task group 1 {the node 1, the node 2} needs to be higher than an execution sequence of the task group 2 {the node 3, the node 4} because a task associated with the node 4 needs to depend on an execution result of a task associated with the node 1. The execution sequence of task group 2 {the node 3, the node 4} needs to be higher than an execution sequence of the task group 3 {the node 5, the node 6} because a task associated with the node 6 depends on an execution result of a task associated with the node 3. If the task group 1, the task group 2, and the task group 3 are all executed, the task group 4 {the node 8, the node 9} and the task group 5 {the node 7, the node 10} may be processed in parallel because there is no dependency relationship between tasks associated with nodes in the task group 4 {the node 8, the node 9} and the task group 5 {the node 7, the node 10}.

In this embodiment of this application, an indegree of a node associated with a task in each task group is 0, indicating that tasks in a same task group do not depend on each other, and no intermediate data needs to be generated, so that occupation of a machine memory can be reduced. In addition, a quantity of tasks in the task group is not greater than N, so that a data amount of output data of the task can be limited, thereby reducing memory usage of the output data of the task. In addition, tasks in a same task group are fully decoupled, do not depend on each other, and can be processed in parallel. This can improve task processing efficiency, reduce an end to end (end to end, E2E) delay of task processing, and improve system performance of task processing.

Optionally, step 303 may include: establishing a correspondence between P tasks in a first task group and M instances based on a task orchestration target, where P≤N, P is a positive integer, and M is a positive integer. The M instances are used to execute the P tasks, the first task group is any one of at least two task groups, and the task orchestration target is a shortest sum of time for executing the P tasks by the M instances.

In this embodiment of this application, the sum of time for executing the P tasks by the M instances may be obtained based on previous running statistics information. Statistics about time used by each instance to execute different tasks may be collected in advance, and then the sum of time used when the P tasks are executed by the M instances is calculated. For a task in each task group, when a corresponding instance is allocated to the task, the P tasks are orchestrated based on a target of shortest time (min*_{L,P} finish_timeᵢ,* 1 ≤ *i* ≤ P) for executing the P tasks by the M instances. This can avoid a case in which processing of an entire task group is slowed down due to excessively long processing time of a task. In this way, an end-to-end delay is reduced, and resource utilization is improved.

When P≤M, each task may be associated with one instance. When P>M, P tasks in any task group may be orchestrated in at least the following two manners, in other words, a correspondence between the P tasks and the M instances is established. The following separately describes the two manners.
1. For each task group, divide the group into subgroups.

The process may include: grouping the P tasks in the first task group into M subgroups based on the task orchestration target, where an absolute value of a difference between execution time of a task in at least one subgroup and a time reference value is less than a first threshold, and the time reference value includes a ratio of a sum of time for executing the P tasks to M; and establishing a correspondence between the M subgroups and the M instances.

In this process, the time reference value (mean_value) may be first determined, and the time reference value may be the ratio of the sum of time for executing the P tasks to M.

If the P tasks include tasks whose execution time is greater than the time reference value, the tasks are separately grouped, that is, each task whose execution time is greater than the time reference value is separately grouped into a subgroup. In this way, after the P tasks are grouped into the M subgroups, the M subgroups include at least one first subgroup, the first subgroup includes one task, and execution time of the task is greater than the time reference value. In other words, when execution time of a task is greater than the time reference value, the task may be separately grouped into a subgroup, and an instance is used to specially execute the task. In this way, the task can be prevented from slowing down another task.

For a task whose execution time is less than the time reference value, subgroups may be obtained through division in a traversal manner. For example, one task may be first selected from the first task group, and then other tasks continue to be traversed, to find another task, where a sum of execution time of the two tasks is as close as possible to the time reference value. If the sum of execution time of the two tasks does not reach the time reference value, the traversal may be continued to add a third task to the subgroup, so that a sum of execution time of the three tasks should be as close as possible to the time reference value. Whether to add a new task to a subgroup that has not been fully partitioned may be determined in a distance manner. This process may be as follows: If a sum of execution time of tasks in the subgroup is closer to the time reference value when the new task is added to the subgroup that has not been fully partitioned, the new task is added to the subgroup. If the sum of execution time of the tasks in the subgroup is far away from the time reference value (may exceed the time reference value) after the new task is added, the new task is not added to the subgroup, and a next task continues to be traversed until all tasks in the first task group are traversed, to complete division of the subgroup. Then, the subgroup is removed from the first task group, and a remaining task in the first task group continues to be grouped. In this way, after the P tasks are grouped into the M subgroups, the M subgroups include at least one second subgroup, the second subgroup includes at least two tasks, and an absolute value of a difference between a sum of execution time of the at least two tasks and the time reference value is less than the first threshold. In other words, when execution time of some tasks is short, at least two such tasks may be grouped into one subgroup, and the at least two tasks in the subgroup are executed through a same instance. In this way, time of each instance for executing a task may be approximately the same, the instance does not need to enter a waiting state excessively early, and resource utilization is improved.

In this embodiment of this application, execution time of a task in each subgroup is as close as possible to the time reference value, that is, an absolute value of a difference between execution time of a task in at least one subgroup and the time reference value is as close as possible to 0. The first threshold may be a very small positive number close to 0, for example, a possible value like 0.1 or 0.01. In this application, the P tasks are orchestrated and grouped into different subgroups based on a requirement that the absolute value of the difference between the execution time of the task in the at least one subgroup and the time reference value is less than the first threshold. This helps improve task processing efficiency.

2. Directly establish a correspondence between each task and an instance, and configure priorities for at least two tasks associated with a same instance.

The process may be as follows: If the P tasks include a task whose execution time is greater than the time reference value, an allocation relationship between the task and an independent instance is established for the task. To be specific, tasks whose execution time is greater than the time reference value independently correspond to different instances, and these instances are no longer configured for another task.

For a task whose execution time is less than the time reference value, an instance in instances for which no allocation relationship is established may be first configured. Then, for the instance, a task traversal method is used to traverse other tasks, to find another task, where a sum of execution time of the two tasks is as close as possible to the time reference value. If the sum of the execution time of the two tasks does not reach the time reference value, the traversal may be continued to add a third task to the subgroup. A sum of execution time of the three tasks should be as close as possible to the time reference value. This idea is basically the same as the foregoing idea of subgroup division, and details are not described herein again.

When instances configured for two or more tasks are the same, execution priorities need to be determined for these tasks. In this way, when a task is subsequently allocated to an instance, the task may be allocated to a corresponding instance for execution based on an allocation relationship between an instance and a task and a priority.

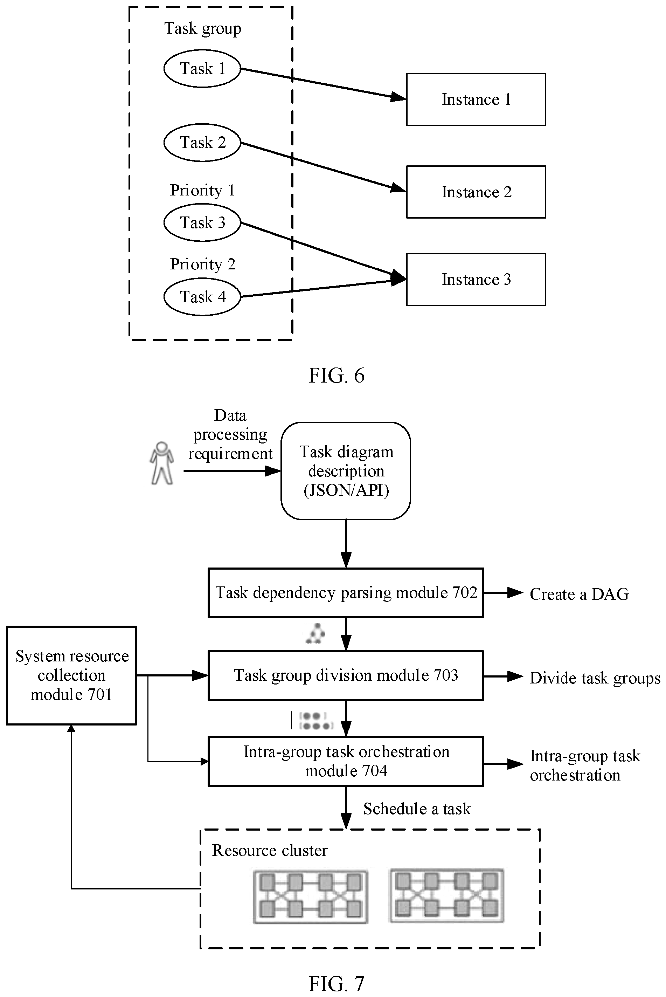

The process may be understood with reference to FIG. 6. As shown in FIG. 6, a first task group includes four tasks: a task 1, a task 2, a task 3, and a task 4. The four tasks need to be allocated to three instances for execution: an instance 1, an instance 2, and an instance 3. A process of orchestrating the four tasks may be as follows: It is determined that execution time of the four tasks are sequentially 9 milliseconds (ms), 6 ms, 3 ms, and 3 ms, and the time reference value is (9+6+3+3)/3=7 ms.

After the traversal, it is learned that the execution time 9 ms of the task 1 is greater than the time reference value 7 ms, and the execution time 6 ms of the task 2, the execution time 3 ms of the task 3, and the execution time 3 ms of the task 4 are all less than the time reference value 7 ms. In this case, the task 1 may be configured for the instance 1. The execution time 6 ms of the task 2 is close to the time reference value 7 ms, and after the execution time of the task 3 or the execution time of the task 4 is added, a sum of the two tasks is far away from the time reference value 7 ms compared with 6 ms of the task 2. In this case, the task 2 is configured for the instance 2. Then, the task 3 and the task 4 are configured for the instance 3. There are two tasks pointing to the instance 3, and priorities of the task 3 and the task 4 need to be configured. For example, if a priority of the task 3 is set to 1 and a priority of the task 4 is set to 2, the task 3 is executed earlier than the task 4.

For a system structure of the task processing method described above, refer to FIG. 7 for understanding. As shown in FIG. 7, the system structure includes a system resource collection module 701, a task dependency parsing module 702, a task group division module 703, and an intra-group task orchestration module 704.

The system resource collection module 701 is configured to collect information about a system resource, for example, collect information such as a size of a machine memory in a system, a maximum quantity of instances, a size of a memory occupied by each instance, and a size of a memory occupied by output data of a single task.

The task dependency parsing module 702 may be configured to determine a related task based on a data processing requirement submitted by a user, parse a dependency relationship between tasks, and construct a directed acyclic graph.

The task group division module 703 is configured to perform a task group division process, and group tasks associated with nodes in the directed acyclic graph into at least two task groups. For understanding of the process, refer to related descriptions in the foregoing step 302.

The intra-group task orchestration module 704 is configured to orchestrate a task in each task group. For understanding of this process, refer to related descriptions in step 303.

Orchestrated tasks in each task group can be scheduled to corresponding instances based on a scheduling priority. For a specific process, refer to the foregoing related descriptions for understanding.

The system resource collection module 701, the task dependency parsing module 702, the task group division module 703, and the intra-group task orchestration module 704 may all be deployed on a control plane of a cloud system.

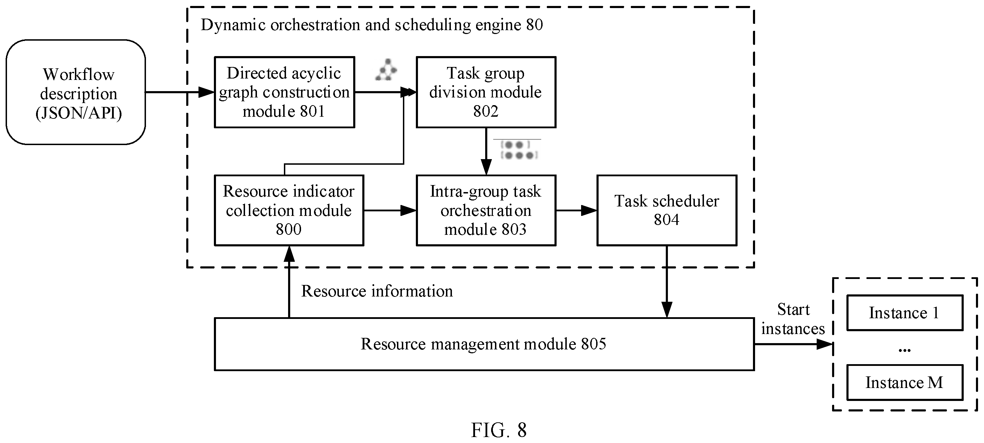

The task processing solution provided in this embodiment of this application may be applied to a workflow scheduling system. As shown in FIG. 8, in the workflow scheduling system, software may provide a group of workflow description interfaces Link and Build_graph_from_json for an upper-layer distributed application. In this way, the user may describe a task workflow through an application programming interface (application programming interface, API) or a DAG workflow description file in a JS object notation (JavaScript object notation, JSON) format, and the description is submitted to a dynamic orchestration and scheduling engine 80. The dynamic orchestration and scheduling engine 80 includes a resource indicator collection module 800, a directed acyclic graph construction module 801, a task group division module 802, an intra-group task orchestration module 803, and a task scheduler 804. The resource indicator collection module 800 may collect resource information from a resource management module 805. The resource information may be information such as a size of a machine memory in a system, a maximum quantity of instances, a size of a memory occupied by each instance, and a size of a memory occupied by output data of a single task.

The directed acyclic graph construction module 801 interfaces with a user, and provides an interface link for describing a dependency relationship through an API. The interface link is used to construct a node in a DAG. The interface link may accept a task function that can be invoked and an input parameter of the task, and return a node representing the task. Different from directly invoking a function, a node created by the link is lazy and does not execute the task function immediately. This allows the user to freely combine a plurality of tasks to build a large DAG without executing these tasks immediately. The node in the DAG returned by the interface link can be used as an input parameter of another task to define a dependency relationship between tasks. Invoking of a plurality of interface links can be nested and combined to generate a complex DAG. The system also provides the Build_graph_from_json interface to receive the description of an entire task DAG at a time without invoking the API for a plurality of times to build dependency relationships. For a function of the directed acyclic graph construction module 801, refer to a function of the task dependency parsing module 702 in FIG. 7 for understanding. After the DAG is built, a Run interface may be invoked to execute the DAG. The Run interface receives a start node of a DAG or the entire DAG as an input to execute a corresponding task procedure. The Run interface persists an execution state, so that the progress can be restored when a fault occurs. The system saves an execution result of each node so that nodes that are successfully executed do not need to be executed again.

The Run interface may interface with the task group division module 802, to trigger formulation of a DAG orchestration plan, including task group division and task intra-group orchestration. For a process of task group division and intra-group task orchestration, refer to a function of the task group division module 703 in FIG. 7 and a function of the intra-group task orchestration module 704 in FIG. 7 for understanding.

After the orchestration is completed, it means that a to-be-allocated resource instance and a priority are configured for each task. After the intra-group task orchestration module 803 completes task orchestration, an orchestrated task is delivered to the task scheduler 804. The task scheduler 804 selects, each time, one task group from the task groups obtained through division to start scheduling, and sends the task to a corresponding resource instance for queuing. The resource instance executes the task.

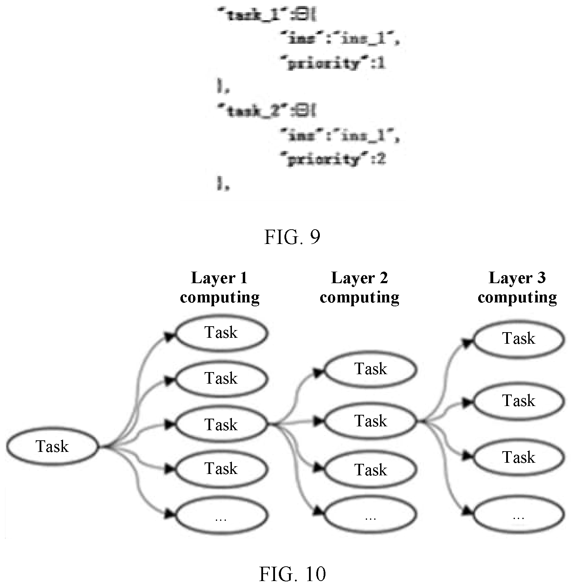

The scheduling process may be understood with reference to FIG. 9. As shown in FIG. 9, there are two tasks: a task 1 (task_1) and a task 2 (task_2), and both the task 1 and the task 2 point to an instance 1 (ins_1). A priority of the task 1 is 1 (priority: 1), and a priority of the task 2 is 2. In this case, when scheduling the task 1 and the task 2, the task scheduler 804 may schedule both the task 1 and the task 2 to a task queue of ins_1, and schedule the task 1 first and then schedule the task 2 according to a priority sequence.

The resource management module 805 manages a specific resource instance, for example, starting the instance 1 to an instance M. The resource management module 805 executes tasks based on the tasks sent by the task scheduler 804. The resource management module 805 may put the tasks into a task queue in a priority sequence. The instance continuously extracts a task from the queue in a loop, and starts to execute the task.

The system structure shown in FIG. 8 can shield the differences in the underlying hardware, to implement resource isolation.

The task processing solution provided in this embodiment of this application may be further applied to a financial system. Offline calculation of a financial quantization factor of the financial system is used as an example. In this scenario, a dependency relationship between tasks is complex. As shown in FIG. 10, a plurality of layers of tasks that have a dependency relationship may be nested in one task, and FIG. 10 shows three layers of nested tasks of a task. FIG. 10 is merely an example. Actually, more layers of tasks may be nested.

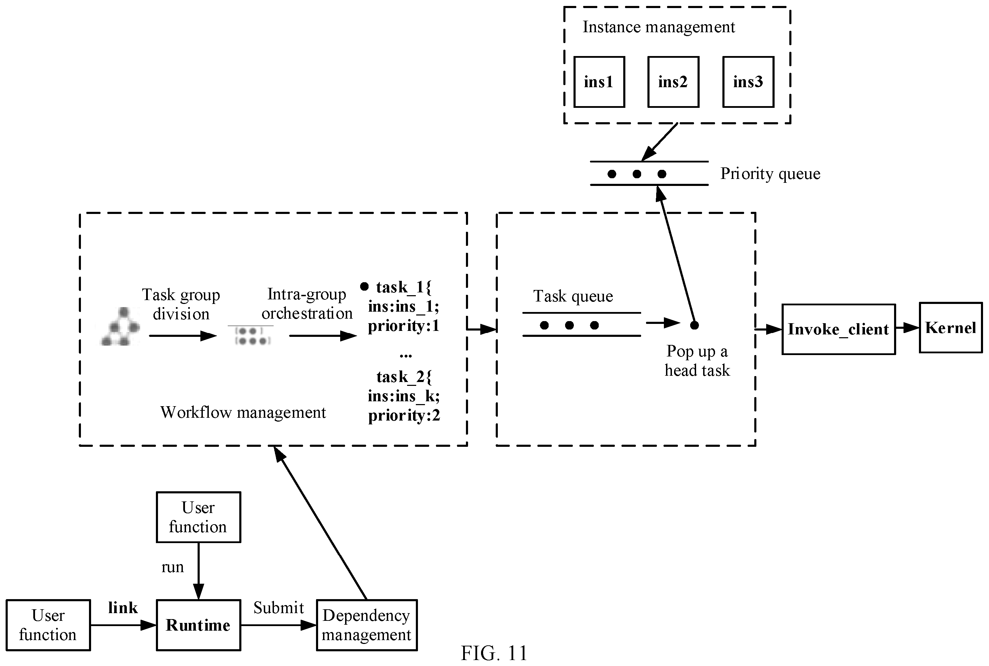

A task processing process in this scenario may be understood with reference to FIG. 11. As shown in FIG. 11, user programs (user functions) may be distributed on a plurality of machines. Different machines may separately invoke a source data reading method read_highfreq_from_assets to read minute-level source data of finance, and store the minute-level source data for subsequent factor calculation.

In a formal factor calculation phase, a user cyclically submits tasks in batches and calls the link interface. Input parameters are upstream factors on which the factor depends and source data on which the factor depends. The output result can be used as the input parameters of the downstream factor. A runtime function at a system layer can submit a task to a dependency manager (Dependency Manager) module to analyze upstream and downstream dependencies, construct a DAG, and trigger a workflow manager (Workflow Manager) module to divide the DAG into task groups and orchestrate intra-group tasks. After intra-group orchestration is performed, each task is assigned priority and ins attributes, a relative sequence of tasks, and a location of a resource node to which the task is sent. The workflow manager module invokes a submit_task internal method to send a task to a task queue of a task manager module for resource allocation.

In the task manager module, the task queue continuously attempts to pop up a task. After the task is successfully popped up, the task queue attempts to call an internal method ins_mgr.schedule to pop up a corresponding instance. If the instance is also successfully popped up, an internal ins.add_task method is invoked to insert the task into a queue of instances based on a priority.

Then, the invoke client module, namely, a module that interfaces with a task orchestration and scheduling layer and a resource allocation layer, may be used to arrange and deliver all related tasks to a resource management kernel for task execution.

The foregoing describes the task processing method. The following describes a task processing apparatus provided in embodiments of this application with reference to accompanying drawings.

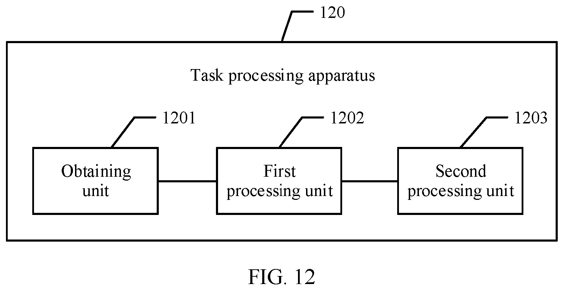

As shown in FIG. 12, the task processing apparatus 120 provided in this embodiment of this application includes:
an obtaining unit 1201, configured to obtain a first directed acyclic graph used to describe a data processing task, where the first directed acyclic graph includes a plurality of nodes and a plurality of edges used to connect the nodes, each node represents a task, and the edge represents a dependency relationship between two connected nodes;
a first processing unit 1202, configured to group the plurality of nodes into at least two task groups, where a quantity of tasks in each task group is not greater than N, an indegree of a node associated with a task in each task group is zero, N is determined based on a size of a machine memory, a size of a memory occupied by an instance, and a size of a memory occupied by output data of the task, and N is a positive integer; and
a second processing unit 1203, configured to process each task group.

Optionally, the first processing unit 1202 is specifically configured to: group a node whose indegree is zero in the first directed acyclic graph into at least one task group, to obtain a second directed acyclic graph, and update an indegree of a node in the second directed acyclic graph; and group a node whose indegree is zero in the second directed acyclic graph into at least one task group.

Optionally, the first processing unit 1202 is specifically configured to: when a quantity of nodes whose indegrees are zero in the first directed acyclic graph is not greater than N, group the nodes whose indegrees are zero into one task group; or when a quantity of nodes whose indegrees are zero in the first directed acyclic graph is greater than N, no more than N nodes that meet an affinity requirement are grouped into a same task group.

Optionally, the second processing unit 1203 is specifically configured to: establish a correspondence between P tasks in a first task group and M instances based on a task orchestration target, where P≤N, P is a positive integer, and M is a positive integer. The M instances are used to execute the P tasks, the first task group is any one of at least two task groups, and the task orchestration target is a shortest sum of time for executing the P tasks by the M instances.

Optionally, the second processing unit 1203 is specifically configured to: when P>M, group the P tasks in the first task group into M subgroups based on the task orchestration target, where an absolute value of a difference between execution time of a task in at least one subgroup and a time reference value is less than a first threshold, and the time reference value includes a ratio of a sum of time for executing the P tasks to M; and establish a correspondence between the M subgroups and the M instances.

Optionally, the M subgroups include at least one first subgroup, the first subgroup includes one task, and execution time of the task is greater than time reference value.

Optionally, the M subgroups include at least one second subgroup, the second subgroup includes at least two tasks, and an absolute value of a difference between a sum of execution time of the at least two tasks and the time reference value is less than the first threshold.

Optionally, the second processing unit 1203 is specifically configured to: when P>M, establish an allocation relationship between each of the P tasks and the M instances, where an absolute value of a difference between execution time of at least two tasks pointing to a same instance and the time reference value is less than the first threshold, and the time reference value includes a ratio of a sum of time for executing the P tasks to M; and configure priorities for the at least two tasks pointing to the same instance, where the priorities indicate a sequence in which the at least two tasks pointing to the same instance are allocated to the corresponding instance.

Optionally, the obtaining unit 1201 is further configured to: obtain a maximum quantity of instances, a size of a memory occupied by each instance, a size of a memory occupied by output data of a single task, and a size of a machine memory; and determine N according to the following relational expression: ${\sum }_{i = 0}^{X} {MemAllocate}_{insi} + {\sum }_{j = 0}^{N} {ResSize}_{taskj} < {Limit}_{mem}$

*X* is the maximum quantity of instances, *MemAllocateᵢₙₛᵢ* is the size of the memory occupied by each instance, *ResSizeₜₐₛₖⱼ* is the size of the memory occupied by the output data of the single task, and *Limitₘₑₘ* is the size of the machine memory.

Optionally, the obtaining unit 1201 is specifically configured to: receive a data processing requirement, where the requirement is used to determine a task that needs to be executed; and parse a dependency relationship between tasks that need to be executed, to construct the first directed acyclic graph.

In another embodiment of this application, a computer-readable storage medium is further provided. The computer-readable storage medium stores computer-executable instructions. When a processor of a computer device executes the computer-executable instructions, the computer device performs the steps performed by the task processing apparatus in FIG. 3 to FIG. 11.

In another embodiment of this application, a computer program product is further provided. The computer program product includes computer program code. When the computer program code is executed on a computer, the computer device performs the steps performed by the task processing apparatus in FIG. 3 to FIG. 11.

In another embodiment of this application, a chip system is further provided. The chip system includes one or more interface circuits and one or more processors. The interface circuit and the processor are interconnected through a line. The interface circuit is configured to receive a signal from a storage of a computer device, and send the signal to the processor. The signal includes computer instructions stored in the storage. When the processor executes the computer instructions, the computer device performs the steps performed by the task processing apparatus in FIG. 3 to FIG. 11. In a possible design, the chip system may further include a storage, and the storage is configured to store program instructions and data that are necessary for a client. The chip system may include a chip, or may include a chip and another discrete component.

In another embodiment of this application, a computer device cluster is further provided, including at least one computer device. Each computer device includes a processor and a storage. The processor of the at least one computer device is configured to execute instructions stored in the storage of the at least one computer device, so that the computer device cluster performs the steps performed by the task processing apparatus in FIG. 3 to FIG. 11.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. All or some of the integrated units may be implemented by software, hardware, firmware, or any combination thereof.

When software is used to implement the integrated units, all or some of the integrated units may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

## Claims

1. A task processing method, comprising:
obtaining a first directed acyclic graph used to describe a data processing task, wherein the first directed acyclic graph comprises a plurality of nodes and a plurality of edges used to connect the nodes, each node represents a task, and the edge represents a dependency relationship between two connected nodes;
grouping the plurality of nodes into at least two task groups, wherein a quantity of tasks in each task group is not greater than N, an indegree of a node associated with a task in each task group is zero, N is determined based on a size of a machine memory, a size of a memory occupied by an instance, and a size of a memory occupied by output data of the task, and N is a positive integer; and
processing each task group.

2. The method according to claim 1, wherein grouping the plurality of nodes into the at least two task groups comprises:
grouping a node whose indegree is zero in the first directed acyclic graph into at least one task group, to obtain a second directed acyclic graph, and updating an indegree of a node in the second directed acyclic graph; and
grouping a node whose indegree is zero in the second directed acyclic graph into at least one task group.

3. The method according to claim 2, wherein grouping the node whose indegree is zero in the first directed acyclic graph into the at least one task group comprises:
when a quantity of nodes whose indegrees are zero in the first directed acyclic graph is not greater than N, grouping the nodes whose indegrees are zero into one task group; and
when a quantity of nodes whose indegrees are zero in the first directed acyclic graph is greater than N, grouping, into a same task group, no more than N nodes that meet an affinity requirement.

4. The method according to any one of claims 1 to 3, wherein processing each task group comprises:
establishing a correspondence between P tasks in a first task group and M instances based on a task orchestration target, wherein P≤N, P is a positive integer, M is a positive integer, the M instances are used to execute the P tasks, the first task group is any one of the at least two task groups, and the task orchestration target is a shortest sum of time for executing the P tasks by the M instances.

5. The method according to claim 4, wherein when P>M, establishing the correspondence between the P tasks in the first task group and the M instances according to a task orchestration policy comprises:
grouping the P tasks in the first task group into M subgroups based on the task orchestration target, wherein an absolute value of a difference between execution time of a task in at least one subgroup and a time reference value is less than a first threshold, and the time reference value comprises a ratio of the sum of time for executing the P tasks to M; and
establishing a correspondence between the M subgroups and the M instances.

6. The method according to claim 5, wherein the M subgroups comprise at least one first subgroup, the first subgroup comprises one task, and execution time of the task is greater than the time reference value.

7. The method according to claim 5 or 6, wherein the M subgroups comprise at least one second subgroup, the second subgroup comprises at least two tasks, and an absolute value of a difference between a sum of execution time of the at least two tasks and the time reference value is less than the first threshold.

8. The method according to claim 4, wherein when P>M, establishing the correspondence between the P tasks in the first task group and the M instances according to a task orchestration policy comprises:
establishing an allocation relationship between each of the P tasks and the M instances, wherein an absolute value of a difference between execution time of at least two tasks pointing to a same instance and a time reference value is less than a first threshold, and the time reference value comprises a ratio of the sum of time for executing the P tasks to M; and
configuring priorities for the at least two tasks pointing to the same instance, wherein the priorities indicate a sequence in which the at least two tasks pointing to the same instance are allocated to the corresponding instance.

9. The method according to any one of claims 1 to 8, further comprising:
obtaining a maximum quantity of instances, a size of a memory occupied by each instance, a size of a memory occupied by output data of a single task, and a size of a machine memory; and
determining N according to the following relational expression: ${\sum }_{i = 0}^{X} {MemAllocate}_{insi} + {\sum }_{j = 0}^{N} {ResSize}_{taskj} < {Limit}_{mem} , wherein$
*X* is the maximum quantity of instances, *MemAllocateᵢₙₛᵢ* is the size of the memory occupied by each instance, *ResSizeₜₐₛₖⱼ* is the size of the memory occupied by the output data of the single task, and *Limitₘₑₘ* is the size of the machine memory.

10. The method according to any one of claims 1 to 8, wherein obtaining the first directed acyclic graph used to describe the data processing task comprises:
receiving a requirement for processing the data, wherein the requirement is used to determine a task that needs to be executed; and
parsing a dependency relationship between tasks that need to be executed, and constructing the first directed acyclic graph.

11. A task processing apparatus, comprising:
an obtaining unit, configured to obtain a first directed acyclic graph used to describe a data processing task, wherein the first directed acyclic graph comprises a plurality of nodes and a plurality of edges used to connect the nodes, each node represents a task, and the edge represents a dependency relationship between two connected nodes;
a first processing unit, configured to group the plurality of nodes into at least two task groups, wherein a quantity of tasks in each task group is not greater than N, an indegree of a node associated with a task in each task group is zero, N is determined based on a size of a machine memory, a size of a memory occupied by an instance, and a size of a memory occupied by output data of the task, and N is a positive integer; and
a second processing unit, configured to process each task group.

12. The apparatus according to claim 11, wherein
the first processing unit is specifically configured to:
group a node whose indegree is zero in the first directed acyclic graph into at least one task group, to obtain a second directed acyclic graph, and update an indegree of a node in the second directed acyclic graph; and
group a node whose indegree is zero in the second directed acyclic graph into at least one task group.

13. The apparatus according to claim 12, wherein
the first processing unit is specifically configured to:
when a quantity of nodes whose indegrees are zero in the first directed acyclic graph is not greater than N, group the nodes whose indegrees are zero into one task group; and
when a quantity of nodes whose indegrees are zero in the first directed acyclic graph is greater than N, group, into a same task group, no more than N nodes that meet an affinity requirement.

14. The apparatus according to any one of claims 11 to 13, wherein
the second processing unit is specifically configured to:
establish a correspondence between P tasks in a first task group and M instances based on a task orchestration target, wherein P≤N, P is a positive integer, M is a positive integer, the M instances are used to execute the P tasks, the first task group is any one of the at least two task groups, and the task orchestration target is a shortest sum of time for executing the P tasks by the M instances.

15. The apparatus according to claim 14, wherein when P>M, the second processing unit is specifically configured to:
group the P tasks in the first task group into M subgroups based on the task orchestration target, wherein an absolute value of a difference between execution time of a task in at least one subgroup and a time reference value is less than a first threshold, and the time reference value comprises a ratio of the sum of time for executing the P tasks to M; and
establish a correspondence between the M subgroups and the M instances.

16. The apparatus according to claim 14, wherein when P>M, the second processing unit is specifically configured to:
establish an allocation relationship between each of the P tasks and the M instances, wherein an absolute value of a difference between execution time of at least two tasks pointing to a same instance and a time reference value is less than a first threshold, and the time reference value comprises a ratio of the sum of time for executing the P tasks to M; and
configure priorities for the at least two tasks pointing to the same instance, wherein the priorities indicate a sequence in which the at least two tasks pointing to the same instance are allocated to the corresponding instance.

17. The apparatus according to any one of claims 11 to 16, wherein
the obtaining unit is further configured to: obtain a maximum quantity of instances, a size of a memory occupied by each instance, a size of a memory occupied by output data of a single task, and a size of a machine memory; and determine N according to the following relational expression: ${\sum }_{i = 0}^{X} {MemAllocate}_{insi} + {\sum }_{j = 0}^{N} {ResSize}_{taskj} < {Limit}_{mem} , wherein$
*X* is the maximum quantity of instances, *MemAllocateᵢₙₛᵢ* is the size of the memory occupied by each instance, *ResSizeₜₐₛₖⱼ* is the size of the memory occupied by the output data of the single task, and *Limitₘₑₘ* is the size of the machine memory.

18. A task processing apparatus, comprising a communication interface, a processor, and a storage, wherein the communication interface and the processor are coupled to the storage, the storage is configured to store a program or instructions, and when the program or the instructions are executed by the processor, the task processing apparatus is enabled to perform the method according to any one of claims 1 to 10.

19. A computer-readable storage medium, wherein the computer-readable storage medium stores instructions, and when the instructions are run on a computer device, the computer device is enabled to perform the method according to any one of claims 1 to 10.

20. A computer program product, wherein the computer program product comprises computer program code, and when the computer program code is run on a computer device, the computer device is enabled to perform the method according to any one of claims 1 to 10.

21. A chip system, wherein the chip system comprises one or more interface circuits and one or more processors, the interface circuit and the processor are interconnected through a line, the interface circuit is configured to receive a signal from a storage of a task processing apparatus and send the signal to the processor, and the signal comprises computer instructions stored in the storage; and when the processor executes the computer instructions, the task processing apparatus performs the method according to any one of claims 1 to 10.

22. A computer device cluster, comprising at least one computer device, wherein each computer device comprises a processor and a storage, wherein
the processor of the at least one computer device is configured to execute instructions stored in the storage of the at least one computer device, so that the computer device cluster performs the method according to any one of claims 1 to 10.
